(19) **Europäisches Patentamt**

**European Patent Office**

**Office européen des brevets**

(11) **EP 0 631 216 B1**

(12) **EUROPÄISCHE PATENTSCHRIFT**

(45) Veröffentlichungstag und Bekanntmachung des Hinweises auf die Patenterteilung:
**05.04.2000 Patentblatt 2000/14**

(51) Int. Cl.$^7$: **G05D 16/20**

(21) Anmeldenummer: **94107603.6**

(22) Anmeldetag: **17.05.1994**

(54) **Verfahren und Steuerschaltung zur Druckregelung durch Magnetventile, z.B. zur Druckprüfung bei Kunststoffrohren**

Method and control circuit for regulating pressure by means of solenoid valves, e.g. for pressure testing of plastic tubes

Procédé et circuit de contrôle pour régler la pression avec les vannes magnétiques par exemple pour contrôler la pression de tubulaires en matière plastique

(84) Benannte Vertragsstaaten:
**AT BE GB IT NL**

(30) Priorität: **18.05.1993 DE 4316560**

(43) Veröffentlichungstag der Anmeldung:
**28.12.1994 Patentblatt 1994/52**

(73) Patentinhaber:
**IPT Institut für Prüftechnik Gerätebau GmbH & CO KG**
**86447 Todtenweis (DE)**

(72) Erfinder:
- **Haas, Richard**
  **D-86551 Aichach (DE)**
- **Sommer, Friedrich**
  **D-86447 Todtenweis (DE)**

(74) Vertreter:
**Kleinert, Hans-Siegfried, Dipl. Ing.**
**Marsopstrasse 24a**
**81245 München (DE)**

(56) Entgegenhaltungen:
**DE-A- 3 713 110**  **US-A- 4 766 921**
**US-A- 4 974 622**

**Beschreibung**

Die Erfindung betrifft ein Verfahren und eine Steuerschaltung zur Druckregelung an unter Druck stehenden Einrichtungen, z.B. zur Druckprüfung bei Kunststoffrohren, gemäß dem Oberbegriff von Patentanspruch 1 bzw. Patentanspruch 8.

Druckprüfungen erfordern häufig eine hohe Konstanz des Prüfdruckes, die sich mit der üblichen Steuerung der Magnetventile, indem beim Unter- oder Überschreiten eines vorgegebenen Schwellenwertes das zuständige Magnetventil jeweils geöffnet oder geschlossen wird, bis der vorgesehene Druck sich eingestellt hat, nicht mehr erzielen läßt. Auch eine Ansteuerung mit Steuerimpulsen vorgegebener Länge und gegebenenfalls mit mehreren solcher Steuerimpulse in Folge, je nach Abweichung zwischen Ist- und Solldruck, führt bei engen Toleranzgrenzen nicht immer zum Ziel.

Aufgabe der Erfindung ist es daher, ein Verfahren und eine entsprechende Steuerschaltung zur Druckregehung durch Magnetventile zu schaffen, mit dem bzw. der es möglich ist, bei den in einer Prüfanlage gegebenen verschiedenen Randbedingungen die für die Druckprüfung gesetzten engen Toleranzgrenzen einzuhalten.

Diese Aufgabe wird gemäß der Erfindung durch die kennzeichnenden Merkmale der Patentansprüche 1 und 8 gelöst. Die Erfindung berücksichtigt dabei die Tatsache, daß die Anzugseit eines Magnetventils sehr stark von der Druckdifferenz zwischen Einlaß und Auslaß der Ventile abhängig ist. Bei mehreren gleichzeitig betriebenen Prüfstationen mit verschiedenen Prüfdrucken zwischen z.B. 1 und 125 bar können daher die Anzugszeiten zwischen z.B. 5 und 40 bis 50 ms liegen. Einheitlich lange Steuerimpulse, deren Dauer über der längst möglichen Anzugsdauer liegen muß, z.B. bei 100 ms, können also zu sehr unterschiedlichen Ventilöffnungszeiten zwischen beispielsweise 50 und 95 ms führen.

Zwar wäre es denkbar, abhängig von der jeweiligen Druckdifferenz die Dauer der Steuerimpulse individuell zu bemessen. Dies würde aber fortlaufend aufwendige Berechnungen und individuelle Einstellungsmöglichkeiten in den jeweils zugehörigen Steuereinrichtungen bedingen, was einen erheblichen zusätzlichen Aufwand bedeutet.

Die Erfindung geht daher einen anderen Weg, indem ausgehend vom jeweils ersten Steuerimpuls mit vorgegebener Dauer, z.B. 5 ms, einer Impulsfolge bei fortbestehender Abweichung vom Prüfdruck die Zeitdauer eines jeden nachfolgenden Steuerimpulses jeweils um eine vorgegebene Zeitdauer, z.B. um 5 ms, gegenüber dem jeweiligen Vorgängerimpuls verlängert wird. Unabhängig von der jeweiligen Anzugszeit des zu steuernden Magnetventils erfolgt im Zuge der jeweiligen Steuerimpulsfolge bei einem der Steuerimpulse schließlich der Anzug des Magnetventils, wobei es durch den ersten öffnenden Steuerimpuls beispielsweise maximal 5 ms geöffnet bleibt und die Öffnungszeiten mit den nachfolgenden Steuerimpulsen schrittweise vergrößert werden. Die Druckregelung durch die einzelnen Magnetventile kann somit bei geeigneter Vorgabe der Impulsverlängerungszeit in einfacher Weise dosiert werden, da keine Berechnungen erforderlich sind, sondern lediglich die Anzahl der jeweils aufeinanderfolgenden Steuerimpulse erfaßt werden muß. Die damit verbundene Verlängerung der Regelzeit ist dagegen ohne Bedeutung, da sich die Prüflinge in der Regel nur langsam dehnen.

Weiterbildungen der Erfindung ergeben sich aus den weiteren Patentansprüchen 2 bis 7, die sich auf weitere Steuerungsmaßnahmen beziehen, z.B. auf die Verwendung gesonderter Magnetventilsteuereinheiten, auf die Unterscheidung zwischen Grob- und Feinregelung, auf die Festlegung der Schaltschwellen und auf die Steuerung durch einen übergeordneten Prozessor.

Der Aufbau der Steuerschaltung gemäß der Erfindung ergibt sich aus den Merkmalen des Patentanspruches 8. Die wesentliche Änderung gegenüber herkömmlichen Steuerschaltungen mit einem Impulsgeber besteht in Schalteinrichtungen, die jeweils nach Wirksamwerden der Steuerschaltung ausgehend vom jeweils ersten Steuerimpuls mit vorgegebener Dauer die Abgabe weiterer Steuerimpulse mit einer gegenüber dem jeweils vorhergehenden Steuerimpuls um eine vorgegebene Zeitdauer verlängerten Dauer bewirken, bis die Druckabweichung beseitigt ist.

Wesentliche Bestandteile der Steuerschaltung sind gemäß einer Weiterbildung neben einer Impulsstufe zur Erzeugung von Steuerimpulsen mit jeweils zunehmender Impulsdauer und ein Impulszähler zur Bestimmung des jeweiligen Impulses in einer Impulsfolge in Verbindung mit einem dadurch voreinstellbaren Rückwärtszähler zur Festlegung der jeweiligen Impulsdauer. Weiterbildungen hierzu ergeben sich aus den weiteren Patentansprüchen 10 bis 13, die sich insbesondere auf einen zusätzlichen Pausenzähler und auf eine zusätzliche Weichenschaltung für die Ansteuerung der verschiedenen Magnetventile beziehen

Einzelheiten der Erfindung seien nachfolgend anhand eines in der Zeichnung dargestellten Ausführungsbeispieles näher erläutert. Im einzelnen zeigen

Figur 1 ein Prinzipschaltbild einer Prüfanlage mit mehreren Prüfstationen mit Druckregelung durch Magnetventile,

Figur 2 das Anzugsverhalten der Magnetventile bei unterschiedlichen Druckdifferenzen und deren Einfluß auf die Druckänderung,

Figur 3 den Druckverlauf bei einer gemäß der Erfindung arbeitenden Steuerung der Magnetventile,

Figur 4 und Figur 5    Flußdiagramme für die Durchführung der Druckmessung und der Druckregelung für die Prüfstationen der Prüfanlage von Figur 1 und

Figur 6    ein Blockschaltbild der den zu steuernden Magnetventilen vorgeschalteten Magnet ventilsteuereinheit.

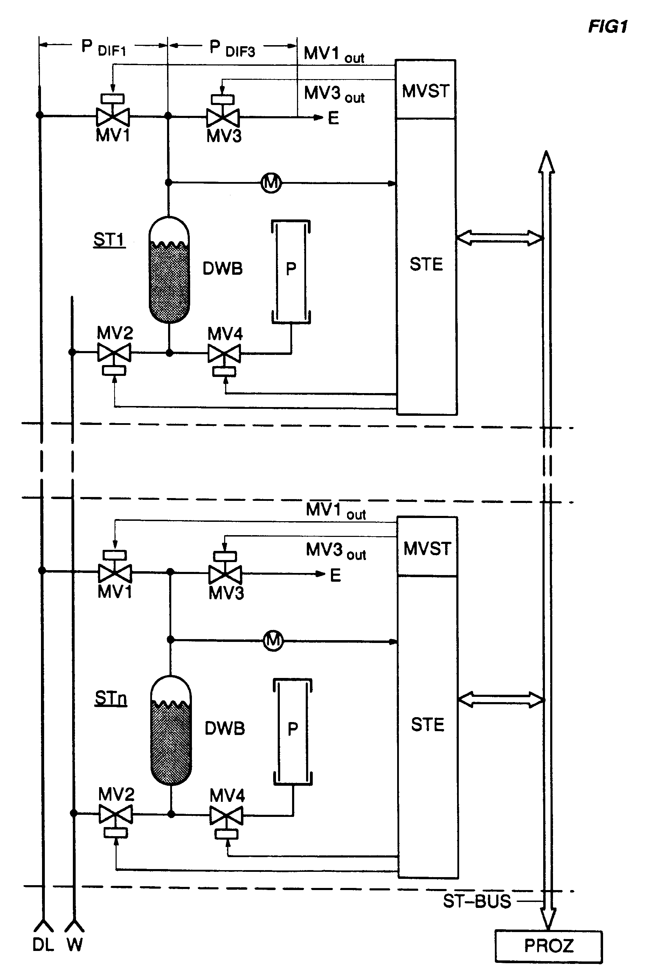

Die in Figur 1 dargestellte Prüfanläge besteht aus mehreren Prüfstationen ST1 bis STn zur Prüfung von Druckrohren aus thermoplastischen Kunststoffen auf ihre Lebenserwartung, indem sie bei erhöhten Temperaturen und/oder erhöhten Drucken künstlich gealtert werden. Diese Alterungsprüfung erfolgt aus Sicherheitsgründen mit Druckwasser. Demzufolge besteht jede der Prüfstationen ST... aus einer mit Wasser gefüllten Druckvorlageflasche DWB mit über ein Magnetventil MV4 angeschlossenem Prüfling P, die beide von der Wasserleitung W aus über das Magnetventil MV2 mit Wasser gefüllt werden. Anschließend wird das Wasser in der Druckvorlageflasche DWB und damit der Prüfling P über die Druckgasleitung DL und das Magnetventil MV1 mit Druckgas beaufschlagt. Ein weiteres Magnetventil MV3 dient zur gegebenenfalls notwendigen Druckabsenkung. Druckmesser M überwachen ständig den jeweils herrschenden Prüfdruck und melden ihn an die jeder Prüfstation ST... zugeordnete Steuereinrichtung STE, die alle über ein Prozessorleitungssystem ST-BUS mit einem zentralen Steuerprozessor PROZ verbunden sind. Dieser Steuerprozessor steuert in an sich bekannter Weise den Prüfungsverlauf an den einzelnen Station ST.... Dazu werden ihm die von den einzelnen Steuereinrichtungen STE fortlaufend ermittelten Meßgrößen übermittelt, damit diese mit den vorgegebenen Prüfparametern verglichen und bei Abweichungen die notwendigen Regelbefehle erteilt werden können, die von der jeweils betroffenen Steuereinrichtung STE an die entsprechenden Stelleinrichtungen weitergegeben werden.

Im Rahmen der vorliegenden Erfindung ist lediglich die Druckregelung durch die Magnetventile MV1 und MV3 von Interesse. An die Prüfdrucke werden nämlich hohe Genauigkeitsanforderungen mit weitgehender Konstanz des Prüfdruckes entsprechend Abweichungen von lediglich $\pm$ 1% gestellt. Andererseits können die einzelnen Prüfdrucke an den einzelnen Prüfstationen ST... einer Prüfanlage abhängig vom Rohrmaterial, dem Nenndruck und der Prüfart zwischen 1 und 125 bar liegen. Das erfordert einen hohen Versorgungsdruck im zentralen Versorgungsnetz mit der Druckgasleitung DL, was abhängig vom jeweils einzustellenden Prüfdruck an den einzelnen Prüfstationen zu unterschiedlich hohen Druckdifferenzen $P_{DIF1}$ bzw. $P_{DIF3}$ an den Magnetventilen MV1 bzw. MV3 und damit zu sehr unterschiedlichen Anzugsverzögerungen für die einzelnen Magnetventile führen kann.

Gemäß der Erfindung ist daher für die den Druck regelnden Magnetventile MV1 und MV3 eine gesonderte Magnetventilsteuereinheit MVST vorgesehen, die über die jeweilige Steuereinrichtung STE mit den von den Steuerbefehlen des zentralen Prozessors PROZ abgeleiteten Steuersignalen beaufschlagt wird, wie später noch erläutert werden wird.

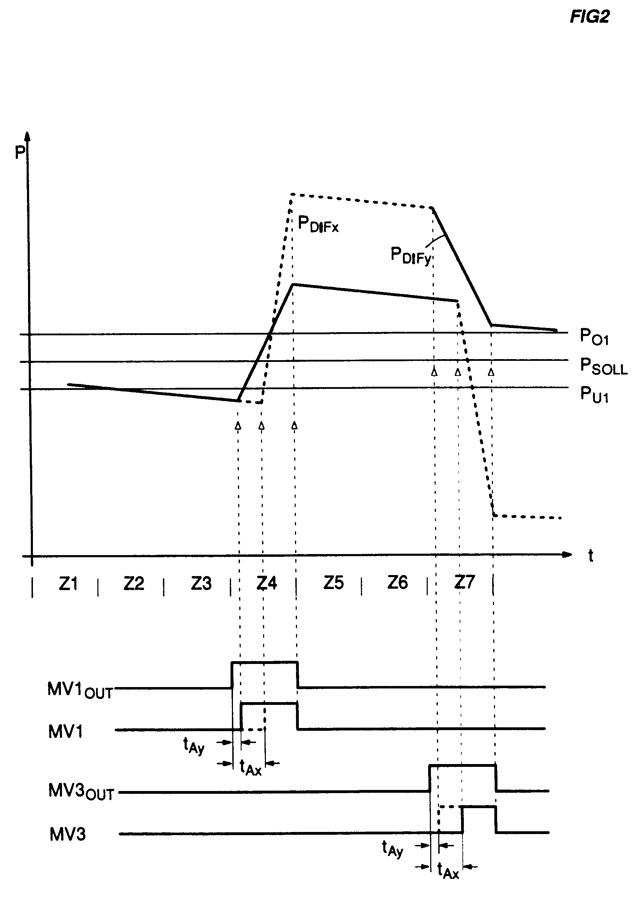

Wie Figur 2 zeigt, reagieren die Magnetventile MV1 abhängig von der zwischen Einlaß und Auslaß bestehenden Druckdifferenz $P_{DIF...}$ sehr unterschiedlich, und ebenso unterschiedlich sind auch die mit dem Öffnen des Magnetventils MV1 verbundenen Druckanstiege. Bei einer geringen Druckdifferenz $P_{DIFy}$ - ausgezogene Linie - im Vergleich zu einer viel höheren Druckdifferenz $P_{DIFx}$ - gestrichelte Linie - reagiert das Magnetventil MV1 schneller, nämlich bereits nach der Anzugszeit $t_{Ay}$ gegenüber der längeren Anzugszeit $t_{Ax}$ bei der höheren Druckdifferenz $P_{DIFx}$. Andererseits ist bei einem konstant langen Steuerinspuls $MV1_{OUT}$ der mit dem Öffnen des Magnetventils MV1 verbundene Druckanstieg bei geringer Druckdifferenz $P_{DIFy}$ trotz der längeren Ventilöffnungszeit wesentlich niedriger und flacher verlaufend im Gegensatz zu dem bei der höheren Druckdifferenz $P_{DIFx}$. Auch das Magentventil MV3 zum Entlüften reagiert abhängig von der Druckdifferenz $P_{DIF...}$ mit unterschiedlichen Auswirkungen auf den Prüfdruck, der bei niedrigen Druckdifferenzen $P_{DIFy}$ geringer und flacher verlaufend abgesenkt wird als bei höheren Druckdifferenzen $P_{DIFx}$. Da $P_{DIF1}$ sich umgekehrt proportional zu $P_{DIF3}$ verhält, ist ein langsamer Druckanstieg über das Magnetventil MV1 meist mit einem starken Druckabfall über das Magnetventil MV3 verbunden.

Bei engen Toleranzgrenzen und sehr stark voneinander abweichenden Prüfdrucken an verschiedenen Stationen einer Prüfanlage sind daher überschwingende Reaktionen mit den bisherigen Steuerungen kaum zu vermeiden.

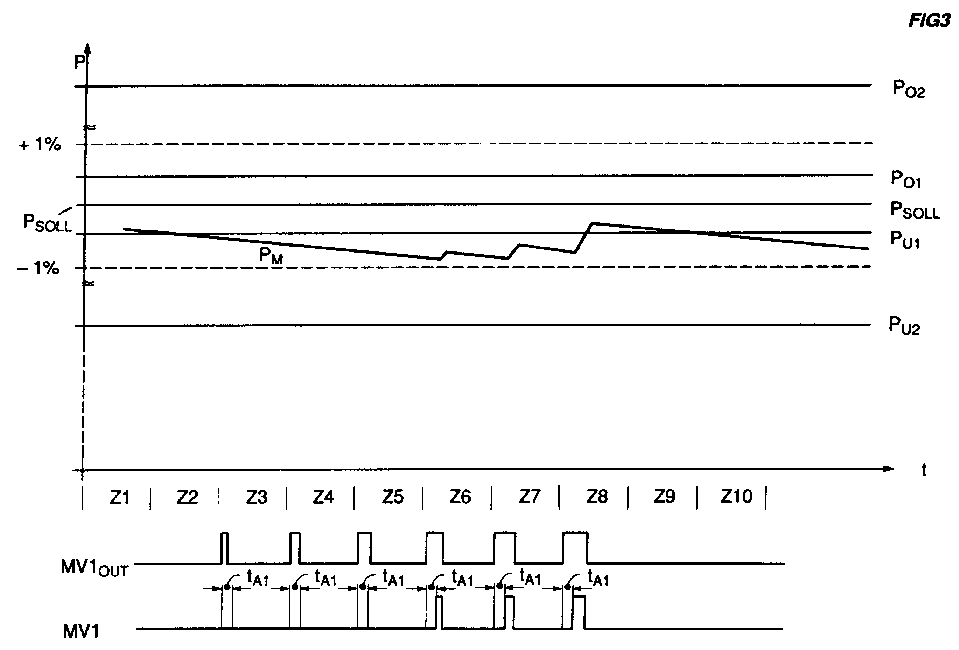

Figur 3 zeigt den Verlauf des an einer der Prüfstation ST... von Figur 1 gemessenen Druckes $P_M$ über der Zeit t bei einer Regelung entsprechend der Erfindung in schematischer Darstellung, wobei mit $P_{SOLL}$ der einzuhaltende Solldruck mit den Toleranzgrenzen +1 % und -1 % dargestellt ist. Mit $P_{U2}$ und $P_{O2}$ sind weiterhin die Schaltschwellen bezeichnet, bei deren Unterschreiten bzw. Überschreiten die Grobregelung entsprechend einem Dauerimpulsbetrieb wirksam wird und bei deren Überschreiten bzw. Unterschreiten bis zur nächsten Schaltschwelle $P_{U1}$ bzw. $P_{O1}$ die Feinregelung entsprechend dem Impulsfolgebetrieb gemäß der Erfindung durchgeführt wird. Zwischen den beiden Schaltschwellen $P_{U1}$ und $P_{O1}$ wird dagegen nicht geregelt. Die Schaltschwelle $P_{U2}$ wird dabei, bezogen auf die höchst mögliche Druckdifferenz in der Anlage, so berechnet, daß durch einen der Regelimpulse ausgelösten Druckanstieg ein Überschreiten der Toleranzgrenze sicher vermieden wird. Analoges gilt für die Abwärtsregelung bezüglich der Schaltschwelle $P_{02}$.

Unterhalb der Zeitachse t sind die einzelnen Meßzyklen Z... für eine der Stationen ST von Figur 1 angegeben. Jeder Zyklus Z... dauert beispielsweise 100 ms, und in jedem Zyklus werden jeweils alle n Stationen ST1 STn in gleichen Zeitabständen einmal zur Übernahme des jeweiligen, von einem Analog-/Digitalwandler bereitgestellten Meßergebnisses $P_M$ vom Steuerrechner PROZ aufgerufen und die entsprechenden Stellsignale ermittelt.

Im vorliegenden Beispiel unterschreitet der Meßwert $P_M$ im Zyklus Z2 die Schaltschwelle $P_{U1}$, was zu Beginn des Zyklusses Z3 gemessen wird und den Prozessor PROZ veranlaßt, die Feinregelung wirksam zu schalten. Unmittelbar darauf gibt die Magnetventilsteuereinheit da ersten Steuerimpuls $MV1_{OUT}$ ab, der aber wegen der maßgebenden Ansprechdauer $t_{A1}$ ohne Auswirkung bleibt. Analoges gilt für die in den nachfolgenden Zyklen Z4 und Z5 ausgelösten, jeweils verlängerten Steuerimpulse $MV1_{OUT}$. Erst im Zyklus Z6 wird vom Steuerimpuls die Ansprechdauer $t_{A1}$ überschritten und das Magnetventil MV1 erstmalig für kurze Zeit geöffnet, so daß der Prüfdruck $P_M$ leicht ansteigt. Da zu Beginn des Zyklus Z7 immer noch ein zu niedriger Druck gemessen wird, muß die Steuerimpulsfolge fortgesetzt werden, bis zu Beginn des Zyklus Z9 ein über der Schaltschwelle $P_{U1}$ liegender Druck $P_M$ gemessen wird. Die Druckanhebung erfolgt also stufenweise in feiner Dosierung.

Analoges gilt für die Abwärtsregelung eines zwischen den Schaltschwellen $P_{O2}$ und $P_{O1}$ gemessenen Druckes $P_M$ durch Ansteuerung des Magnetventils MV3.

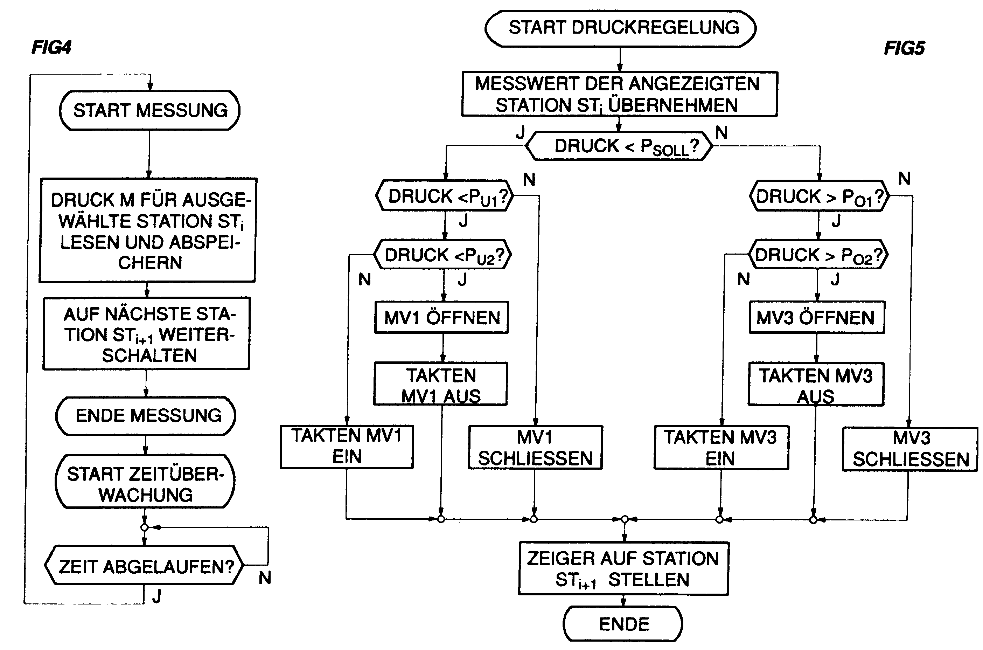

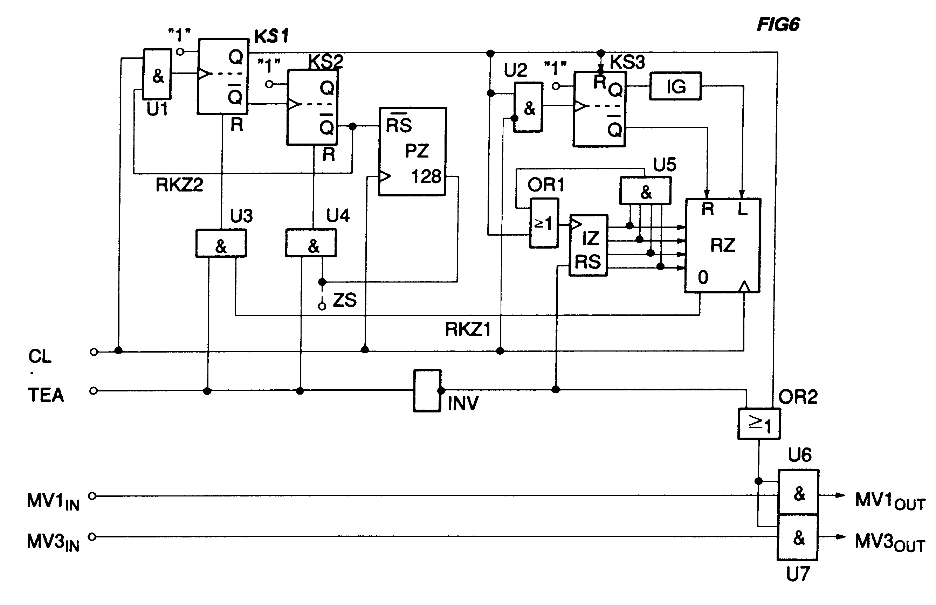

Figur 4 und Figur 5 zeigen die Flußdiagramme der im Prozessor PROZ in diesem Zusammenhang ablaufenden Steuerprogramme, wobei sich Figur 4 auf eine zur Übernahme der Meßwerte von den einzelnen Stationen STi periodisch aufgerufene Unterbrechungsroutine und Figur 5 auf die Druckregelungsroutine im Hauptprogramm des steuernden Prozessors PROZ bezieht.

Mit Start der Unterbrechungsroutine wird der am Druckmesser M gemessene Druck $P_M$ für die vorgewählte Station STi gelesen und für das nachfolgende Hauptprogramm bereitgestellt. Anschließend wird auf die Folgestation STi+1 weitergeschaltet, womit das Ende dieser Routine erreicht ist, so daß ins Hauptprogramm zurückgesprungen und die Zeitüberwachung für einen erneuten Aufruf der Unterbrechungsroutine gestartet werden kann. Diese Unterbrechungsroutine wird bei n Stationen in einer Prüfanlage n mal in einem der in Figur 3 dargestellten Zyklen Z... durchlaufen, und alle Stationen werden in gleichen Zeitabständen zur Erfassung ihrer Meßwerte angesteuert.

Während des anschließenden Hauptprogrammes wird dann unter anderem die Druckregelungsroutine gemäß Figur 5 aufgerufen, die anhand des für eine vorgegebene Station STi vorliegenden Meßwertes reagiert. Zunächst wird dabei geprüft, ob der Druck unterhalb oder oberhalb des Solldruckes $P_{SOLL}$ liegt. Anschließend wird das Ausmaß der Abweichung geprüft. Wird die zweite Schaltschwelle $P_{U1}$ bzw. $P_{O1}$ nicht unter- bzw. überschritten, werden Befehle zum Schließen der Magnetventile MV1 bzw. MV3 ausgelöst. Bewegt sich der gemessene Druck zwischen den Schaltschwellen $P_{U1}$ und $P_{U2}$ bzw. $P_{O1}$ und $P_{O2}$, dann wird ein Befehl zum Takten des zuständigen Magnetventils MV1 bzw. MV3 ausgelöst. Ist schließlich die festgestellte Druckabweichung größer und liegt der gemessene Druck unterhalb der Schaltschwelle $P_{U2}$ bzw. oberhalb der Schaftschwelle $P_{O2}$, dann wird ein Befehl zum Öffnen der zuständigen Magnetventile MV1 bzw. MV3 ausgelöst und durch Umschalten auf den Impulsdauerbetrieb die Grobregelung eingeleitet.

Nach Durchlaufen eines der dargestellten Programmzweige wird dann ein Zeiger auf die nächstfolgende Station STi+1 eingestellt, so daß beim nachfolgend erneuten Aufruf dieser Routine die nächste Station STi+1 kontrolliert wird.

Die vom Prozessor PROZ an die jeweilige Station ST... übermitteln Befehle "MV... Öffnen" oder "MV... Schließen" sowie "Takten MV... Ein" oder "Takten MV... Aus" werden von der jeweils betroffenen Steuereinheit STE in eine Kombination von drei Signalen für die Magnetventilsteuereinheit MVST umgesetzt, nämlich in je ein individuelles Signal $MV1_{IN}$ oder $MV3_{IN}$ für die Auswahl des jeweils anzusteuernden Magnetventiles MV1 oder MV3 und in ein die Art der Regelung anzeigendes Signal TEA gemeinsam für beide Magnetventile MV....

Figur 6 zeigt das Blockschaltbild der diese Signale in Verbindung mit Zeittaktimpulsen CL verarbeitenden Magnetventilsteuereinheit MVST.

Am Ausgang dieser Magnetventilsteuereinheit befindet sich eine Weichenschaltung, bestehend aus einem ODER-Glied OR2 und bei UND-Gliedern U6 und U7 zur individuellen Ansteuerung eines der beiden Magnetventile MV1 oder MV3 mit den entsprechenden Steuerinspulsen $MV1_{OUT}$ oder $MV3_{OUT}$. Die Auswahl erfolgt direkt durch die Steuersignale $MV1_{IN}$ oder $MV3_{IN}$, wahrend die eigentlichen Steuerimpulse für die Magnetventile über das gemeinsame ODER-Glied OR2 geliefert werden, nämlich entweder als vom invertierten Steuersignal TEA abgeleiteter Dauerimpuls entsprechender Länge zur Grobregelung oder als von der bistabilen Kippstufe KS1 - einer aus den beiden Kippstufen KS1 und KS2 bestehenden Impulsstufe - gelieferten Impulsfolge zur Feinregelung.

Die bistabile Kippstufe KS1 wird über das vorgeschaltete UND-Glied U1 durch die Vorderflanke eines Zeittaktimpulses CL gesetzt, wenn die zweite Kippstufe KS2 zurückgesetzt und über das UND-Glied U3 kein Rücksetzsignal wirksam ist. Der dadurch ausgelöste Steuerimpuls am Ausgang Q gibt über den invertierten Rücksetzeingang R die Kippfstufe KS3 frei die nachfolgend mit der Rückflanke des steuernden Zeittaktimpulses CL über das UND-Glied U2 gesetzt wird.

Außerdem wird über das ODER-Glied OR1 ein durch das invertierte Signal TEA zurückgesetzter und freigegebener Impulszähler IZ mit jedem von der Kippstufe KS1 abgegebenen Steuerimpuls um einen Schritt weitergeschaltet. Dieser Zähler ist mit einem Rückwärtszähler RZ gekoppelt, der mit dem Zahlerstand des Impulszählers IZ durch Setzen der Kippstufe KS3 und den nachgeschalteten Impulsformer IG über den Eingang L jeweils ladbar und durch die Zeittaktimpulse CL schrittweise rückstellbar ist. Über einen Rückkopphungszweig RKZ1 ist der Ausgang 0 mit dem UND-Glied U3 verbunden, so daß beim Signal TEA=1 die gesetzte Kippstufe KS1 wieder zurückgesetzt wird, wenn der Rückwärtszähler RZ die Nullstellung erreicht. Da beim ersten Impuls der Kippstufe KS1 der Impulszähler auf den Wert 1, beim zweiten Impuls auf den Wert 2 usw. eingestellt wird, verlängert sich die Dauer eines jeden von der Kippstufe KS1 in Folge gelieferten Steuerimpulses von Impuls zu Impuls um die Dauer einer Zeittaktperiode der Zeittaktimpulse CL.

Mit jedem Rücksetzen der Kippstufe KS1 wird über den Ausgang $\bar{Q}$ die Kippstufe KS2 gesetzt und damit über den Rückkopplungszweig RKZ2 zum UND-Glied U1 ein erneutes Setzen der Kippstufe KS1 verhindert. Außerdem wird mit dem Rücksetzen der Kippstufe KS1 die Kippstufe KS3 zurückgesetzt, so daß auch der Rückwärtszahler RZ über seinen Eingang R zurückgesetzt wird.

Die durch den Rückkopplungszweig RKZ2 bedingte Setzsperre für die Kippstufe KS1 kann beim Signal TEA=1 nach einer vorgegebenen Zeit über das UND-Glied U4 durch Rücksetzen der Kippstufe KS2 wieder aufgehoben werden, so daß von der Kippstufe KS1 ein weiterer Steuerimpuls abgegeben werden kann. Die der Pausendauer zwischen den Steuerimpulsen der Kippstufe KS1 entsprechende Sperrzeit kann z.B. durch ein periodisch wiederkehrendes Zeitscheibensignal ZS, das jeweils mit dem Beginn eines Zyklus Z... für eine Station ST... von Figur 3 zusammenfällt, vorgegeben werden. Die Pausendauer kann aber auch, wie dargestellt, von einem gesonderten Pausenzähler PZ abgeleitet werden, der von den Zeittaktimpulsen ZL fortgeschaltet wird und jeweils mit Setzen der Kippstufe KS2 am Ende des von der Kippstufe KS1 jeweils ausgelösten Steuerimpulses freigegeben wird. Dadurch ist es möglich, unabhängig von der Zyklussteuerung für die Meßwerterfassung die Abstände bis zur Auslösung des jeweils nächsten Steuerimpulses zur Druckregelung zu vergrößern, um sicherzustellen, daß der unmittelbar vorher ermittelte Meßwert unbeeinflußt von Einschwingvorgängen und Laufzeitverzögerung durch die Mediumsbewegung im Drucksystem ist. Bei einem 7-Bitzähler mit einer Zählkapazität von 128 ergeben sich bei einer Taktperiode von 5 ms beispielsweise Abstände von 640 ms gegenüber einer Zyklusdauervon z.B. 100ms.

**Patentansprüche**

1. Verfahren zur Druckregelung durch Magnetventile (MV...) an unter Druck stehenden Einrichtungen, z.B. zur Druckprüfung bei Kunststoffrohren, indem der Druck an einem Prüfling (P) periodisch gemessen und bei Abweichungen vom jeweils vorgegebenen Sollwert ($P_{SOLL}$) entweder angehoben oder abgesenkt wird, indem das entsprechende Magnetventil (MV1 bzw. MV3) nach der erstmaligen Feststellung einer unzulässigen Druckabweichung durch einen Steuerimpuls geöffnet wird,
**dadurch gekennzeichnet,**
daß ausgehend vom jeweils ersten Steuerimpuls mit vorgegebener Dauer die Zeitdauer eines jeden nachfolgenden Steuerimpulses um eine vorgegebene Zeitdauer gegenüber dem jeweiligen Vorgängerimpuls verlängert wird, so daß unabhängig von den durch die jeweilige Druckdifferenz zwischen Einlaß und Auslaß der Magnetventile bedingten unterschiedlichen Anzugszeiten der Magnetventile (MV...) die Druckregelung in einfacher Weise dosiert werden kann.

2. Verfahren nach Anspruch 1,
**dadurch gekennzeichnet,**
daß für die Erzeugung der Steuerimpulsfolgen zur Druckregelung durch die Magnetventile (MV...) diesen vorgeschaltete gesonderte Magnetventilsteuereinheiten (MVST) verwendet werden, die von einer übergeordneten Steuerung (PROZ,STE) bei einer festgestellten unzulässigen Druckabweichung gestartet und nach Beseitigung der unzulässigen Druckabweichung wieder zurückgesetzt werden.

3. Verfahren nach Anspruch 2,
**dadurch gekennzeichnet**,
daß die Magnetventilsteuereinheiten (MVST) bei einer ein vorgegebenes Ausmaß überschreitenden unzulässigen Druckabweichung von der übergeordneten Steuerung (PROZ,STE) zur Abgabe eines Dauerimpulses veranlaßt werden, der solange anhält, bis das vorgegebene Ausmaß der unzulässigen Druckabweichung wieder unterschritten wird, und daß die Magnetventilsteuereinheiten (MVST) anschließend auf die Erzeugung der Steuerimpulsfolge umgesteuert werden, bis die unzulässige Druckabweichung beseitigt ist.

4. Verfahren nach Anspruch 3,
**dadurch gekennzeichnet**,
daß eine dem Impulsdauerbetrieb entsprechende Grobregelung durchgeführt wird, wenn die gemessenen Druckwerte ($P_M$) unterhalb eines gegenüber dem Sollwert ($P_{SOLL}$) kleineren Druckwertes ($P_{U2}$) als erste untere Schaltschwelle oder oberhalb eines gegenüber dem Sollwert ($P_{SOLL}$) größeren Druckwertes ($P_{O2}$) als erste obere Schaltschwelle liegen, daß eine dem Impulsfolgebetrieb entsprechende Feinregelung durchgeführt wird, wenn die gemessenen Druckwerte ($P_M$) oberhalb der ersten unteren Schaltschwelle ($P_{U2}$) aber unterhalb eines zwischen dieser und dem Sollwert ($P_{SOLL}$) liegenden Druckwertes ($P_{U1}$) als zweite untere Schaltschwelle oder unterhalb der ersten oberen Schaltschwelle ($P_{O2}$) aber oberhalb eines zwischen dieser und dem Sollwert ($P_{SOLL}$) liegenden Druckwertes ($P_{O1}$) als zweite obere Schaltschwelle liegen, wobei die jeweiligen Druckwerte ($P_{U1},P_{U2},P_{O1},P_{O2}$) für die Schaltschwellen abhängig vom jeweils einzuhaltenden Sollwert ($P_{SOLL}$) und den vorgegebenen Toleranzgrenzen in Verbindung mit den Zeitwerten für die Impulse, der die Magnetventile (MV1 bzw. MV3) steuernden Steuerimpulsfolge so festgelegt werden, daß durch die Steuerimpulse bewirkte Druckänderungen nicht zur Überschreitung der Toleranzgrenzen führen.

5. Verfahren nach einem der Ansprüche 2 bis 4,
**dadurch gekennzeichnet**,
daß für die zur Druckerhöhung und Druckabsenkung erforderlichen Magnetventile (MV1 bzw. MV3) eine gemeinsame Magnetventilsteuereinheit (MVST) verwendet wird und daß das jeweils zu betätigende Magnetventil (MV1 oder MV3) durch jeweils ein indviduelles Steuersignal ($MV1_{IN}$ bzw. $MV3_{IN}$) gekennzeichnet wird, wahrend ein weiteres Steuersignal (TEA) den Dauerimpulsbetrieb oder den Impulsfolgebetrieb anzeigt.

6. Verfahren nach einem der Ansprüche 1 bis 5 für Prüfanlagen mit mehreren Prüfstationen (ST) und einer zentralen Prozessorsteuerung (PROZ), die über ein Prozessorleitungssystem (ST-BUS) mit den Steuereinrichtungen (STE) der einzelnen Prüfstationen (ST...) als Ein - /Ausgabegeräte gekoppelt ist,
**dadurch gekennzeichnet**,
daß die Steuereinrichtungen (STE) der einzelnen Prüfstationen (ST...) zyklisch nacheinander in gleichen Zeitabständen von der Prozessorsteuerung (PROZ) angesteuert und die jeweils gemessenen Druckwerte ($P_M$) an die Prozessorsteuerung (PROZ) übertragen werden, und daß anschließend der jeweils übertragene Druckwert ($P_M$) mit dem vorgegebenen Prüfdruck ($P_{SOLL}$) verglichen wird und abhängig von dem dabei festgestellten Ausmaß der Druckabweichung die entsprechenden Steuerbefehle an die zuständige Steuereinheit (STE) gegeben und von dieser in die Steuersignale

($MV1_{IN}$ bzw. $MV3_{IN}$ und TEA) für die die Magnetventile (MV1 bzw. MV3) steuernde Magnetventilsteuereinheit (MVST) umgesetzt werden.

7. Verfahren nach Anspruch 6,
**dadurch gekennzeichnet,**
daß die Magnetventilsteuereinheiten (MVST) an den einzelnen Prüfstationen (ST...) nur auf die Start- und Abschaltsignale für den Dauerimpulsbetrieb und den Impulsfolgebetrieb sofort reagieren, daß dagegen die Pausenzeit zwischen den Steuerimpulsen beim Impulsfolgebetrieb größer als die Dauer zwischen zwei aufeinanderfolgenden Druckmessungen wählbar ist.

8. Steuerschaltung (MVST) zur Druckregelung durch Magnetventile (MV...) an unter Druck stehenden Einrichtungen (P), z.B. zur Druckprüfung bei Kunststoffrohren, wobei die die Steuerschaltung einen Impulsgeber aufweist, der bei Feststellung einer Abweichung des an den unter Druck stehenden Einrichtungen (P) gemessenen Druckes vom jeweils vorgegebenen Sollwert ($P_{SOLL}$) Steuerimpulse zum Öffnen jeweils eines von zwei Magnetventilen (z.B MV1 bzw MV3) liefert, um den Druck entweder anzuheben oder aber abzusenken,
**dadurch gekennzeichnet,**
daß die Steuerschaltung (MVST) Schalteinrichtungen aufweist, die jeweils nach Wirksamwerden der Steuerschaltung ausgehend vom jeweils ersten Steuerimpuls mit vorgegebener Dauer die Abgabe weiterer Steuerimpulse mit einer gegenüber dem jeweils vorhergehenden Steuerimpuls um eine vorgegebene Zeitdauer verlängerten Dauer bewirken, bis die Druckabweichung beseitigt ist.

9. Steuerschaltung nach Anspruch 8,
**dadurch gekennzeichnet,**
daß der Impulsgeber und die Schalteinrichtungen der Steuerschaltung (MVST) aus folgenden Schaltungskomponenten bestehen:.

- aus einer Impulsstufe (KS1,KS2),
- aus einem mit der Impulsstufe (KS1,KS2) gekoppelten Impulszähler (IZ), der mit jedem von der Impulsstufe erzeugten Steuerimpuls nach Freigabe für den Impulsfolgebetrieb um einen Zählschritt weitergeschaltet wird,
- aus einem Rückwärtszähler (RZ), der mit jedem von der Impulsstufe (KS1,KS2) abgegebenen Steuerimpuls zurückgesetzt, anschließend mit dem Zählerstand des Impulszählers (IZ) geladen und durch nachfolgende Zeittaktimpulse (CL) schrittweise zurückgestellt wird, und
- aus einem Rückkopplungszweig (RKZ1) zum Zurücksetzen der Impulsstufe (KS1,KS2), der bei Erreichen der Nullstellung des Rückwärtszählers (RZ) wirksam wird.

10. Steuerschaltung nach Anspruch 9, **gekennzeichnet**

- durch einen mit der Impulsstufe (KS1,KS2) gekoppelten Pausenzähler (PZ), der am Ende eines von der Impulsstufe (KS1,KS2) erzeugten Steuerimpulses zur Zählung einer vorgegebenen Anzahl von Zeittaktimpulsen (CL) freigebbar ist und
- durch einen bei Erreichen der vorgegebenen Anzahl (z.B. 128) von Zeittaktimpulsen (CL) wirksam werdenden Rückkopplungszweig (RKZ2) zum Freigeben der Impulsstufe (KS1,KS2) für die Erzeugung eines gegebenenfalls notwendigen weiteren Steuerimpulses.

11. Steuerschaltung nach Anspruch 9 oder 10, **gekennzeichnet** durch eine Weichenschaltung (OR2,U6,U7) zur Weiterleitung der von der Impulsstufe (KS1,KS2) erzeugten Steuerimpulse an das jeweils zuständige Magnetventil (MV1, bzw. MV3).

12. Steuerschaltung nach Anspruch 11, **dadurch gekennzeichnet**, daß die Weichenschaltung aus einem ODER-Glied (OR2) und zwei nachgeschalteten, den beiden Magnetventilen (MV1 und MV3) individuell zugeordneten UND-Gliedern (U6,U7) besteht, wobei dem ODER-Glied (OR2) die Steuerimpulse der Impulsstufe (KS1,KS2) und das invertierte Steuersignal (TEA) für den Impulsfolgebetrieb an seinen Eingängen parallel zugeführt wird, und daß der Ausgang des ODER-Gliedes (OR2) mit jeweils einem Steuereingang der beiden nachgeschalteten UND-Glieder (U6 und U7) verbunden ist, während dem jeweils anderen Eingang das das jeweils anzusteuernde Magnetventil (MV1 oder MV3) kennzeichnende Steuersignal ($MV1_{IN}$ oder $MV3_{IN}$) zugeführt wird.

13. Steuerschaltung nach einem der Ansprüche 9 bis 12, **dadurch gekennzeichnet,** daß die Impulsstufe aus zwei bistabilen Kippstufen (KS1,KS2) besteht, von denen die erste (KS1) zur Erzeugung der Steuerimpulse durch einen der Zeittaktimpulse (CL) setzbar ist, wenn die zweite Kippstufe (KS2) zurückgesetzt ist, und die zweite Kippstufe (KS2) zur Freigabe des Pausenzählers (PZ) setzbar ist, wenn die erste Kippstufe (KS1) zurückgesetzt wird, wobei bei Vorliegen des Impulsfolgebetriebes (TEA=1) die zweite Kippstufe (KS2) über den mit dem Pausenzähler (PZ) bestehenden Rückkopplungszweig (RKZ2) und die erste Kippstufe (KS1) über den mit dem Rückwärtszahler (RZ) bestehenden Rückkopplungszweig (RKZ1) rücksetzbar ist.

**Claims**

1. Method for regulating pressure by means of solenoid valves (MV...) on pressurized devices, for example for pressure testing in the case of plastic tubes, by periodically measuring the pressure on a test specimen (P) and, in the event of deviations from the respectively prescribed set point ($P_{SOLL}$), raising or lowering the pressure by using a control pulse to open the corresponding solenoid valve (MV1 or MV3) after detecting an impermissible pressure deviation for the first time, characterized in that, starting from the respective first control pulse with a prescribed duration, the period of each subsequent control pulse is lengthened by a prescribed period by comparison with the respective previous pulse, so that the pressure regulation can be dosed in a simple way independently of the different operating times of the solenoid valves (MV...) caused by the respective pressure difference between the inlet and outlet of the solenoid valves.

2. Method according to Claim 1, characterized in that for the purpose of generating the control pulse trains for regulating pressure by means of the solenoid valves (MV...) use is made of those upstream separate solenoid valve control units (MVST) which are started by a higher-level controller (PROZ,STE) given a determined impermissible pressure deviation, and are reset again after elimination of the impermissible pressure deviation.

3. Method according to Claim 2, characterized in that given an impermissible pressure deviation overshooting to a prescribed extent, the higher-level controller (PROZ,STE) causes the solenoid valve control unit (MVST) to output a continuous pulse which lasts until the prescribed extent of the impermissible pressure deviation is undershot again, and in that the solenoid valve control units (MVST) are subsequently switched to generating the control pulse train until the impermissible pressure deviation is eliminated.

4. Method according to Claim 3, characterized in that coarse regulation is carried out in accordance with the continuous pulse operation when the measured pressure values ($P_M$) are below a pressure value ($P_{U2}$), by comparison with the set point ($P_{SOLL}$), as the first lower operating point, or above a pressure value ($P_{O2}$), larger by comparison with the set point ($P_{SOLL}$), as the first upper operating point, and in that fine regulation corresponding to the pulse train operation is carried out when the measured pressure values ($P_M$) are above the first lower operating point ($P_{U2}$) but below a pressure value ($P_{U1}$), situated between the latter and the set point ($P_{SOLL}$), as second lower operating point, or below the first upper operating point ($P_{O2}$) but above a pressure value ($P_{O1}$), situated between the latter and the set point ($P_{SOLL}$), as second upper operating point, the respective pressure values ($P_{O1}$, $P_{O2}$, $P_{O1}$, $P_{O2}$) for the operating points are fixed as a function of the set point ($P_{SOLL}$) respectively to be observed and the prescribed tolerance limits in conjunction with the time values for the pulses of the control pulse train controlling the solenoid valves (MV1 or MV3, respectively) such that pressure changes caused by the control pulses do not lead to overshooting of the tolerance limits.

5. Method according to one of Claims 2 to 4, characterized in that a common solenoid valve control unit (MVST) is used for the solenoid valves (MV1 and MV3, respectively) required for raising pressure and lowering pressure, and in that the solenoid valve (MV1 or MV3) respectively to be actuated is characterized in each case by an individual control signal ($MV1_{IN}$ and $MV3_{IN}$, respectively), while a further control signal (TEA) indicates the continuous pulse operation or the pulse train operation.

6. Method according to one of Claims 1 to 5 for test installations with a plurality of test stations (ST) and a central processor controller (PROZ) which is coupled via a processor wiring system (ST-BUS) to the control devices (STE) of the individual test stations (ST...) as input/output units, characterized in that the control devices (STE) of the individual test stations (ST...) are driven cyclically one after another at equal time intervals by the processor controller (PROZ) and the respectively measured pressure values ($P_M$) are transmitted to the processor control (PROZ), and in that subsequently the respectively transmitted pressure value ($P_M$) is compared with the prescribed test pressure ($P_{SOLL}$) and, depending on the extent of the pressure deviation determined in this case, the corresponding control commands are passed to the competent control unit (STE) and are converted by the latter into the control signals ($MV1_{IN}$ or $MV3_{IN}$, and TEA) for the solenoid valve control unit (MUST) controlling the solenoid valves (MV1 and MV3, respectively).

7. Method according to Claim 6, characterized in that the solenoid valve control units (MVST) at the individual test stations (ST...) react immediately only to the starting and switch-off signals for the continuous pulse operation and the pulse train operation, and in that, by contrast, the pause between the control pulses in the case of the pulse train operation can be selected to be greater than the duration between two sequential pressure measurements.

8. Control circuit (MVST) for regulating pressure by means of solenoid valves (MV...) on pressurized devices (P), for example for pressure testing in the case of plastic tubes, the control circuit having a pulse generator which, upon determination of a deviation of the pressure measured at the pressurized devices (P) from the respectively prescribed set point ($P_{SOLL}$), supplies control pulses for opening respectively one of two solenoid valves (for example MV1 or MV3), in order either to raise or else lower the pressure, characterized in that the control circuit (MVST) has switching devices which, starting from the respective first control pulse of prescribed duration, in each case after the control circuit becomes effective outputs further control pulses with a duration lengthened by a prescribed period by comparison with the respectively preceding control pulse, until the pressure deviation is eliminated.

9. Control circuit according to Claim 8, characterized in that the pulse generator and the switching devices of the control circuit (MVST) comprise the following circuit components:

   - a pulse stage (KS1, KS2),
   - a pulse counter (IZ) which is coupled with a pulse stage (KS1, KS2) and is progressed by one counting step with each control pulse, generated by the pulse stage, after release for the pulse train operation,
   - a down counter (RZ) which is reset for each control pulse emitted by the pulse stage (KS1, KS2), is subsequently loaded with the counter content of the pulse counter (IZ) and is reset in steps by subsequent clock pulses (CL), and
   - a feedback branch (RKZ1) for resetting the pulse stage (KS1, KS2), which becomes active when the zero setting of the down counter (RZ) is reached.

10. Control circuit according to Claim 9, characterized

   - by a pause counter (PZ) which is coupled to the pulse stage (KS1, KS2) and can be released at the end of a control pulse generated by the pulse stage (KS1, KS2) in order to count a prescribed number of clock pulses (CL), and
   - by a feedback branch (RKZ2), which becomes active when the prescribed number (for example 128) of clock pulses (CL) is reached, for releasing the pulse stage (KS1, KS2) for generating a possibly required further control pulse.

11. Control circuit according to Claim 9 or 10, characterized by a filter circuit (OR2, U6, U7) for relaying the control pulses generated by the pulse stage (KS1, KS2) to the respectively competent solenoid valve (MV1 or MV3).

**12.** Control circuit according to Claim 11, characterized in that the filter circuit comprises an OR element (OR2) and two downstream AND elements (U6, U7) individually assigned to the two solenoid valves (MV1 and MV3), the OR element (OR2) being fed the control pulses of the pulse stage (KS1, KS2) and the inverted control signal (TEA) for the pulse train operation in parallel at its input, and in that the output of the OR element (OR2) is connected to in each case one control input or two downstream AND elements (U6 and U7), while the respective other input is fed the control signal (MV1$_{IN}$ or MV3$_{IN}$) characterizing the respective solenoid valve (MV1 or MV3) to be driven.

**13.** Control circuit according to one of Claims 9 to 12, characterized in that the pulse stage comprises two bistable flip flops (KS1, KS2) of which the first (KS1) can be set to generate the control pulses by means of one of the clock pulses (CL) when the second flip flop (KS2) is reset, and the second flip flop (KS2) can be set to release the pulse counter (PZ) when the first flop flip (KS1) is reset, it being possible in the case of the pulse train operation (TEA = 1) to reset the second flip flop (KS2) via the feedback branch (RKZ2) of the pulse counter (PZ), and to reset the first flip flop (KS1) via the feedback branch (RKZ1) with the down counter (RZ).

**Revendications**

**1.** Procédé pour la régulation de la pression au moyen de vannes magnétiques (MV...) dans des dispositifs se trouvant sous pression, par exemple pour l'essai de pression de tubes en matière plastique, dans lequel la pression est mesurée périodiquement dans une éprouvette (P) et est soit relevée soit abaissée en cas d'écarts par rapport à la valeur de consigne respectivement prédéterminée (P$_{SOLL}$), dans lequel la vanne magnétique correspondante (MV1, respectivement MV3) est ouverte au moyen d'une impulsion de commande après la première constatation d'un écart de pression inadmissible, caractérisé en ce que, partant chaque fois de la première impulsion de commande de durée prédéterminée, la durée de chaque impulsion de commande suivante est prolongée d'une durée prédéterminée par rapport à l'impulsion précédente respective, de sorte que la régulation de la pression peut être dosée de façon simple, indépendamment des différentes durées d'actionnement des vannes magnétiques (MV...) causées par la différence de pression respective entre l'entrée et la sortie des vannes magnétiques.

**2.** Procédé suivant la revendication 1, caractérisé en ce que l'on utilise, pour la production des séries d'impulsions de commande pour la régulation de la pression au moyen des vannes magnétiques (MV...), des unités séparées de commande des vannes magnétiques (MVST) montées avant celles-ci, qui sont mises en marche par une commande prioritaire (PROZ, STE) en cas de constatation d'un écart de pression inadmissible et sont à nouveau remises à zéro après suppression de l'écart de pression inadmissible.

**3.** Procédé suivant la revendication 2, caractérisé en ce que les unités de commande des vannes magnétiques (MVST) reçoivent l'instruction donnée par la commande prioritaire (PROZ, STE), en présence d'un écart de pression inadmissible dépassant une ampleur prédéterminée, d'émettre une impulsion continue, qui persiste jusqu'à ce que l'écart de pression inadmissible soit redescendu en dessous de l'ampleur prédéterminée, et en ce que les unités de commande des vannes magnétiques (MVST) sont ensuite inversées pour produire la série d'impulsions de commande, jusqu'à ce que l'écart de pression inadmissible soit supprimé.

**4.** Procédé suivant la revendication 3, caractérisé en ce que l'on effectue une régulation grossière correspondant au fonctionnement par impulsion continue lorsque les valeurs de pression mesurées (P$_M$) se situent en dessous d'une valeur de pression (P$_{U2}$) inférieure par rapport à la valeur de consigne (P$_{SOLL}$) et constituant un premier seuil de commutation inférieur ou au-dessus d'une valeur de pression (P$_{O2}$) supérieure par rapport à la valeur de consigne (P$_{SOLL}$) et constituant un premier seuil de commutation supérieur, en ce que l'on effectue une régulation fine correspondant au fonctionnement par série d'impulsions lorsque les valeurs de pression mesurées (P$_M$) se situent au-dessus du premier seuil de commutation inférieur (P$_{U2}$) mais en dessous d'une valeur de pression (P$_{U1}$) comprise entre celui-ci et la valeur de consigne (P$_{SOLL}$) et constituant un second seuil de commutation inférieur ou en dessous du premier seuil de commutation supérieur (P$_{O2}$) mais au-dessus d'une valeur de pression (P$_{O1}$) comprise entre celui-ci et la valeur de consigne (P$_{SOLL}$) et constituant un second seuil de commutation supérieur, dans lequel les valeurs de pression respectives (P$_{U1}$, P$_{U2}$, P$_{O1}$, P$_{O2}$) pour les seuils de commutation sont fixées en fonction de la valeur de consigne respective (P$_{SOLL}$) à respecter et des limites de tolérance prédéterminées en relation avec les valeurs de temps pour les impulsions de la série d'impulsions de commande commandant les vannes magnétiques (MV1 respectivement MV3), d'une façon telle que des variations de pression induites par les impulsions de commande ne conduisent pas au franchissement des limites de tolérance.

5. Procédé suivant l'une quelconque des revendications 2 à 4, caractérisé en ce que l'on utilise une unité de commande des vannes magnétiques (MVST) commune pour les vannes magnétiques (MV1, respectivement MV3) nécessaires pour l'augmentation de la pression et l'abaissement de la pression, et en ce que la vanne magnétique respective à actionner (MV1 ou MV3) est respectivement caractérisée par un signal de commande individuel (MV1$_{IN}$, respectivement MV3$_{IN}$), tandis qu'un autre signal de commande (TEA) indique le fonctionnement par impulsion continue ou le fonctionnement par série d'impulsions.

6. Procédé suivant l'une quelconque des revendications 1 à 5 pour des installations d'essai avec plusieurs stations d'essai (ST) et une commande centrale par processeur (PROZ), qui est couplée par un réseau de lignes du processeur (ST-BUS) aux dispositifs de commande (STE) des stations d'essai individuelles (ST...) constituant les appareils d'entrée/sortie, caractérisé en ce que les dispositifs de commande (STE) des stations d'essai individuelles (ST...) sont amorcés cycliquement l'un après l'autre à des intervalles de temps égaux par la commande par processeur (PROZ) et les valeurs de pression respectivement mesurées (P$_M$) sont transmises à la commande par processeur (PROZ), et en ce qu'ensuite la valeur de pression transmise respectivement (P$_M$) est comparée à la pression d'essai prédéterminée (P$_{SOLL}$) et, en fonction de l'ampleur de l'écart de pression ainsi constaté, les instructions de commande correspondantes sont données à l'unité de commande (STE) concernée et sont converties par celle-ci en signaux de commande (MV1$_{IN}$, respectivement MV3$_{IN}$ et TEA) pour l'unité de commande des vannes magnétiques (MVST) commandant les vannes magnétiques (MV1, respectivement MV3).

7. Procédé suivant la revendication 6, caractérisé en ce que les unités de commande des vannes magnétiques (MVST) dans les stations d'essai individuelles (ST...) ne réagissent immédiatement qu'aux signaux de démarrage et d'arrêt pour le fonctionnement par impulsion continue et le fonctionnement par série d'impulsions, en ce qu'au contraire on peut choisir un temps de pause entre les impulsions de commande lors du fonctionnement par série d'impulsions plus grand que la durée entre deux mesures de pression successives.

8. Circuit de commande (MVST) pour la régulation de la pression au moyen de vannes magnétiques (MV...) dans des dispositifs (P) se trouvant sous pression, par exemple pour l'essai de pression de tubes en matière plastique, dans lequel le circuit de commande présente un générateur d'impulsions qui, lors de la constatation d'un écart de la pression mesurée dans les dispositifs (P) se trouvant sous pression par rapport à la valeur de consigne (P$_{SOLL}$) respectivement prédéterminée, délivre des impulsions de commande pour ouvrir respectivement l'une de deux vannes magnétiques (par exemple MV1, respectivement MV3), afin soit d'augmenter soit d'abaisser la pression, caractérisé en ce que le circuit de commande (MVST) présente des dispositifs de commutation qui, chaque fois après activation du circuit de commande, partant chaque fois de la première impulsion de commande de durée prédéterminée, provoquent l'émission d'autres impulsions de commande d'une durée prolongée d'une durée prédéterminée par rapport à l'impulsion de commande respectivement précédente, jusqu'à ce que l'écart de pression soit supprimé.

9. Circuit de commande suivant la revendication 8, caractérisé en ce que le générateur d'impulsions et les dispositifs de commutation du circuit de commande (MVST) se composent des éléments de circuit suivants:

- d'un étage d'impulsion (KS1, KS2),
- d'un compteur d'impulsions (IZ) couplé à l'étage d'impulsion (KS1, KS2), qui avance d'un pas de comptage avec chaque impulsion de commande produite par l'étage d'impulsion, après libération pour le fonctionnement par série d'impulsions,
- d'un compteur régressif (RZ), qui est ramené en arrière avec chaque impulsion de commande émise par l'étage d'impulsion (KS1, KS2), qui est ensuite chargé avec l'état de comptage du compteur d'impulsions (IZ) et est ramené à la position initiale pas à pas par les impulsions de synchronisation (CL) qui suivent, et
- d'une branche de réaction positive (RKZ1) pour la remise à zéro de l'étage d'impulsion (KS1, KS2), qui est activée lorsque le compteur régressif (RZ) atteint la position nulle.

10. Circuit de commande suivant la revendication 9, caractérisé

- par un compteur de pauses (PZ) couplé à l'étage d'impulsion (KS1, KS2), qui peut être libéré à la fin d'une impulsion de commande produite par l'étage d'impulsion (KS1, KS2) en vue du comptage d'un nombre prédéterminé d'impulsions de synchronisation (CL), et
- par une branche de réaction positive (RKZ2) devenant active lorsque le nombre prédéterminé (par exemple 128) d'impulsions de synchronisation (CL) est atteint, pour libérer l'étage d'impulsion (KS1, KS2) en vue de produire une autre impulsion de commande éventuellement nécessaire.

11. Circuit de commande suivant la revendication 9 ou 10, caractérisé par un circuit de bifurcation (OR2, U6, U7) pour la transmission des impulsions de commande produites par l'étage d'impulsion (KS1, KS2) à la vanne magnétique respectivement concernée (MV1 respectivement MV3).

12. Circuit de commande suivant la revendication 11, caractérisé en ce que le circuit de bifurcation se compose d'un élément OU (OR2) et de deux éléments ET (U6, U7) qui suivent, associés individuellement aux deux vannes magnétiques (MV1 et MV3), les impulsions de commande de l'étage d'impulsion (KS1, KS2) et le signal de commande inversé (TEA), étant envoyés en parallèle à ses entrées à l'élément OU (OR2) pour le fonctionnement par série d'impulsions, et en ce que la sortie de l'élément OU (OR2) est reliée respectivement à une entrée de commande des deux éléments ET (U6 et U7) qui suivent, tandis que le signal de commande ($MV1_{IN}$ ou $MV3_{IN}$) caractérisant la vanne magnétique à amorcer respectivement (MV1 ou MV3) est envoyé respectivement à l'autre entrée.

13. Circuit de commande suivant l'une quelconque des revendications 9 à 12, caractérisé en ce que l'étage d'impulsion se compose de deux bascules électroniques bistables (KS1, KS2), dont la première(KS1) peut être positionnée par une des impulsions de synchronisation (CL) pour la production des impulsions de commande, lorsque la seconde bascule électronique (KS2) est ramenée à zéro, et la seconde bascule électronique (KS2) peut être positionnée pour la libération du compteur de pauses (PZ), lorsque la première bascule électronique (KS1) est ramenée à zéro, dans lequel, en présence du fonctionnement par série d'impulsions (TEA = 1), la seconde bascule électronique (KS2) peut être ramenée à zéro via la branche de réaction positive (RKZ2) existante avec le compteur de pauses (PZ) et la première bascule électronique (KS1) peut être ramenée à zéro via la branche de réaction positive (RKZ1) existante avec le compteur régressif (RZ).

**FIG1**

*FIG2*

FIG3

14

**FIG4**

START MESSUNG

DRUCK M FÜR AUSGE-WÄHLTE STATION $ST_i$ LESEN UND ABSPEICHERN

AUF NÄCHSTE STATION $ST_{i+1}$ WEITER-SCHALTEN

ENDE MESSUNG

START ZEITÜBER-WACHUNG

ZEIT ABGELAUFEN?  N  J

**FIG5**

START DRUCKREGELUNG

MESSWERT DER ANGEZEIGTEN STATION $ST_i$ ÜBERNEHMEN

DRUCK < $P_{SOLL}$?  J  N

DRUCK < $P_{U1}$?  N  J

DRUCK < $P_{U2}$?  N  J

MV1 ÖFFNEN

TAKTEN MV1 AUS

TAKTEN MV1 EIN

MV1 SCHLIESSEN

DRUCK > $P_{O1}$?  N  J

DRUCK > $P_{O2}$?  N  J

MV3 ÖFFNEN

TAKTEN MV3 AUS

TAKTEN MV3 EIN

MV3 SCHLIESSEN

ZEIGER AUF STATION $ST_{i+1}$ STELLEN

ENDE

EP 0 631 216 B1

**FIG6**